# EUROPEAN PATENT SPECIFICATION

(11) **EP 2 916 641 B1**
(45) Date of publication and mention of the grant of the patent: **10.05.2017**
(21) Application number: 13786745.3
(22) Date of filing: 05.11.2013
(51) Int. Cl.: A01B 49/06, A01C 5/06, A01C 7/08

(54) **METHOD OF CULTIVATING SOIL**
BODENKULTIVIERUNGSVERFAHREN
PROCÉDÉ DE CULTURE DE SOL

(30) Priority: 07.11.2012 GB 201220080
(43) Date of publication of application: 16.09.2015
(73) Proprietor: Claydon, Jeffrey Thomas, Newmarket Suffolk CB8 8YA (GB)
(72) Inventor: Claydon, Jeffrey Thomas, Newmarket Suffolk CB8 8YA (GB)
(74) Representative: Willett, Christopher David
(86) International application number: PCT/GB2013/052885
(87) International publication number: WO 2014/072691

(56) References cited:
- WO-A1-96/05717
- WO-A1-2004/004440
- WO-A1-2010/049720
- DE-A1- 3 032 275
- GB-A- 2 090 714

## Description

### Technical Field

The present invention relates to a method of, and apparatus for, cultivating soil and sowing seed, particularly for use during or following wet weather when the soil is difficult to cultivate.

### Background

WO 2004/086849 discloses a method of cultivating soil and sowing seed involving the generation of a plurality of trenches of broken soil separated by strips of undisturbed soil. The seed is deposited from seeding tines positioned in line with the digging tines that formed the trenches.

It is also known to break up soil and then deposit seed from discs or coulter tines, which travel through the earth as they pass.

However, during wet weather the soil becomes much more difficult to cultivate as its mechanical properties change to a more plastic nature, like a clay material. It is sometimes not possible to break up the soil to produce a granular broken solid which is ideal for sowing seed. Often what happens is that the soil retains its integrity and forms large clumps of soil, rather than smaller particles which provide a good seed bed.

Nevertheless it is sometimes necessary to cultivate and sow seed into wet soil, as it is not always possible to wait for it to dry out.

A problem with using disc tines as is conventional is that they tend to accumulate the wet soil on their surface and they cease to function, being prevented from rotating and depositing seed.

WO2010/049720 discloses soil cultivation apparatus in which an array of deep loosening tines produce contiguous wide troughs of loosened soil, with an array of drill coulters producing shallow planting furrows with a single row of seeds being deposited centrally in each furrow.

The present invention aims to provide an improved method of cultivating and sowing seed into wet soil conditions.

### Summary of the Invention

In a first aspect, the invention relates to a method of cultivating soil and sowing seed, the method comprising breaking up soil by pulling laterally spaced apart digging tines through uncultivated soil, the spacing between the digging tines and the depth of the digging tines being such as to create a corresponding plurality of trenches of broken up soil separated by strips of undisturbed soil, and depositing seed in the formed trenches to either side of the centre of the trench by first and second seeding tines.

Thus for each trench, there are two rows of seed deposited, on either side of the centre line of the trench. Such seeding tines, unlike disc tines, can flow through the wet soil more easily and do not become clogged up with wet soil.

The method is typically carried out by providing a frame adapted to be pulled by a tractor, e.g. on a 3-point linkage at the rear of the tractor, so that the overall height of the frame, and angle of inclination thereof relative to the ground, can be adjusted in known manner.

The digging tines are preferably spaced apart by from 200 to 450mm, more preferably from 250 to 400mm. The width of a trench produced by a digging tine is typically from 130 to 180mm, so this spacing ensures that there are strips of uncultivated soil between each trench.

The first and second seeding tines are preferably spaced off from the centre line of the trench by 60 to 90mm, and are therefore from 120 to 180mm apart from each other.

In addition to the first and second seeding tines being spaced apart from the centre line of the trench, it has been found to be advantageous to also arrange for the first seeding tine to be arranged forward of the second seeding tine. Thus, preferably, for each digging tine, the first seeding tine is spaced from 150 to 500mm, more preferably from 200 to 400mm, most preferably from 250 to 350mm forward of the second seeding tine.

With the above digging tine and seeding tine spacings the result is that the seeding tines are generally regularly spaced apart from each other. Thus preferably the spacing between two adjacent seeding tines in a given trench is similar to that between adjacent seeding tines with undisturbed soil therebetween. In particular the ratio of the two spacings is preferably from 1.5:1 to 1:1.5, more preferably from 1.3:1 to 1:1.3, most preferably from 1.2:1 to 1:1.2.

In a typical agricultural apparatus, as many as from 20 to 50 digging tines can be provided spaced apart, each with two seeding tines, providing from 40 to 100 rows of seed in a single pass.

Conveniently the method of the invention can be carried out by a plurality of assemblies, comprising a digging tine and first and second seeding tines, arranged spaced apart and attached to a frame.

Thus in a second aspect, the invention relates to an arrangement for cultivating soil and sowing seed, comprising a plurality of spaced apart soil cultivation and seeding assemblies, each assembly comprising a body portion having depending therefrom: a leading digging tine, and first and second seeding tines, the seeding tines being spaced either side of the digging tine so that in use, when the arrangement is pulled through soil to be cultivated and seeded, the digging tines create a plurality of trenches of broken up soil separated by strips of undisturbed soil, and seed is deposited in the formed trenches to either side of the centre of the trench by the first and second seeding tines.

As for the first aspect of the invention, the first and second seeding tines are preferably spaced off from the centre line of the trench by 60 to 90mm, and are therefore from 120 to 180mm apart from each other.

In addition to the seeding tines being spaced apart from the centre line of the trench, it has been found to be advantageous to also arrange for the first seeding tine to be arranged forward of the second seeding tine. Thus, preferably, for each digging tine, the first seeding tine is spaced from 150 to 500mm, more preferably from 200 to 400mm, most preferably from 250 to 350mm forward of the second seeding tine.

It has also been found that it is advantageous to arrange for the first and second seeding tines to be positioned relatively close to the digging tines. This helps in particular when turning a corner, as it helps to ensure the placement of the seeds in the troughs. However the seeding tines should not be so close to the digging tines as to be depositing seed before the trench has been fully formed by the digging tines.

Thus, preferably the first seeding tine is spaced behind the digging tine by from 100 to 600mm, more preferably from 200 to 500mm.

The spaced apart assemblies enable cultivation and seeding of a wide area of soil in a single pass.

In a third aspect, the invention relates to a frame for cultivating soil and sowing seed and to be pulled by a motorized vehicle, the frame comprising an arrangement according to the second aspect of the invention adapted to carry out the method according to the first aspect of the invention.

The digging tine acts like a knife to cut into the ground and prepare the primary trench for sowing seed. It is typically arranged to cut at a fixed but adjustable depth, to ensure that the trench formed has a consistent depth.

The seeding tines act by depositing a supply of seeds directly to the rear of a tine, which creates a clear path for the deposition of the seed. Like the digging tines they also act like a knife, which prevents the wet soil from sticking to the tines and clogging up the apparatus. In a preferred embodiment the seeding tines are sprung tines and are resiliently connected to the apparatus.

Seed delivery means may be provided which is adapted to convey seed from a hopper under gravity or using pneumatically powered delivery means to each of the seed delivery means associated with each of the seeding tines.

Alternatively a separate seed hopper with gravity or powered delivery means associated therewith, may be mounted above each of the seeding tines.

In a preferred embodiment the digging tine also comprises a means for delivery of fertiliser. Typically this will be arranged to deposit fertiliser immediately to the rear of the digging tine so that it is placed at the base of the trench formed.

In a preferred embodiment, the method includes a levelling means, to level the soil following the deposition of seed by the seeding tines. For example the levelling means preferably comprises a skid plate or a wheel, the height of which is adjustable, to create just sufficient pressure on the soil so as to compact the soil above and in the region of the seed, to create good soil to seed contact.

Preferably the pressure exerted on the soil by the levelling means is adjustable and is selected so that the soil below the seed will not in general be compacted, so as not to impair the aeration and drainage properties created by breaking up the soil below where the seed is to lie.

The present invention thus provides an improved method and apparatus for sowing seed, possibly directly into uncultivated land (e.g. into stubble). The method and apparatus may be used for to sowing in minimally cultivated seed-beds, which may contain substantial quantities of straw or other residue from a previous crop which can form a mulch, so as to create conservation tillage in which soil between the newly sown rows of the new crop is left relatively undisturbed, and without modification the apparatus may be used for conventional drilling. Preferably the penetration depth of at least some of the tines is adjustable relative to the body or a frame to which they are attached. Typically the penetration depth of the digging tines is adjustable and those of the seeding tines are fixed, although they may be sprung tines.

In one arrangement all the tines are set to penetrate to a similar depth, so that the seed is delivered near to or at the bottom of each trench of disturbed and broken-up soil. Where this is the case, it may not be necessary to compact the soil above the seed and the levelling means in that event may simply comprise levelling tines.

In another arrangement the tines are adjusted so that seeding tines penetrate to only part of the depth penetrated by the digging tines, so that the seed is delivered nearer to the top of each trench.

In a third arrangement the tines are adjusted so that the seeding tines penetrate to a greater depth than the digging tines. This arrangement may be selected if ground conditions suggest that the final depth to which the seed is to be sown should be reached by breaking up the soil to a lesser depth by the digging tines and dragging the seeding tines through the soil broken up to part of the final depth by the first row of tines, thereby reducing the loading on both rows of tines to less than what would be experienced by the tines in the first row if they had to excavate to the final depth.

The present invention will now be illustrated, by way of example, with reference to the following figures in which:
Figure 1 is a front view of a soil cultivation and seeding assembly of an arrangement according to the present invention.
Figure 2 is a side view of the assembly shown in figure 1.

Turning to the figures, the assembly 10 has a body portion 12 with digging tine 14 and two seeding tines 16, 18 depending therefrom.

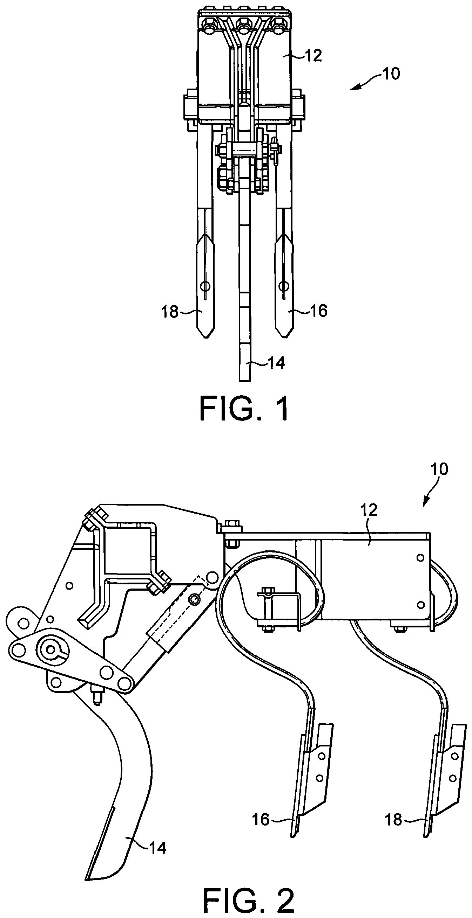

Figure 2 is a side view of the assembly shown in figure 1.

Turning to the figures, the assembly 10 has a body portion 12 with digging tine 14 and two seeding tines 16, 18 depending therefrom.

The seeding tines 16, 18 are spaced either side of the digging tine 14, so that two rows of seed are deposited in the trench created by the seeding tine 14. The lateral spacing between the seeding tines is 150mm so that the rows of seed are also 150mm apart.

As can be seen from Figure 2 the seeding tines 14, 16 are also placed with seeding tine 16 in front of seeding tine 18. This is so that the seeding tines do not interfere with each other while seeding.

The first seeding tine 16 is spaced 418mm behind the digging tine 14. Additionally the second seeding tine 18 is spaced 274mm behind the first seeding tine 16.

Each of the seeding tines 16, 18 have a seed delivery chute 20. In use, seed is passed to the chute, e.g. via feed pipe (not shown).

In use, a plurality of such assemblies can be mounted on a frame so as to permit a larger area of land to be cultivated in a single pass. For the assembly shown the digging tines could be arranged to be spaced apart by approximately 300mm to ensure that the rows of seed are all evenly spaced apart by 150mm.

Such an arrangement results in a series of trenches, each with two rows of seed on either side of it, with the trenches separated by strips of undisturbed soil.

## Claims

1. A method of cultivating soil and sowing seed, the method comprising breaking up soil by pulling laterally spaced apart digging tines (14) through uncultivated soil, the spacing between the digging tines and their depth being such as to create a corresponding plurality of trenches of broken up soil separated by strips of undisturbed soil, and depositing seed in the formed trenches to either side of the centre of the trench by first and second seeding tines (16,18).

2. A method according to claim 1, wherein the digging tines (14) are spaced apart by from 200 to 450mm.

3. A method according to claim 2, wherein the digging tines (14) are spaced apart by from 250 to 400mm.

4. A method according to any one of the preceding claims, wherein the first and second seeding tines (16,18) are spaced off from the centre line of the trench by 60 to 90mm.

5. A method according to any one of the preceding claims wherein the ratio of the spacing between two adjacent seeding tines in a given trench to that between adjacent seeding tines with undisturbed soil therebetween is from 1.5:1 to 1:1.5, more preferably from 1.3:1 to 1:1.3, most preferably from 1.2:1 to 1:1.2.

6. A method according to any one of the preceding claims, wherein for each digging tine, the first seeding tine is spaced from 150 to 500mm, more preferably from 200 to 400mm, most preferably from 250 to 350mm forward of the second seeding tine.

7. A method according to any one of the preceding claims, wherein the first seeding tine is spaced behind each digging tine by from 50 to 200mm, more preferably from 80 to 150mm.

8. An arrangement for cultivating soil and sowing seed, comprising a plurality of spaced apart soil cultivation and seeding assemblies, each assembly comprising a body portion (12) having depending therefrom: a leading digging tine (14), and first and second seeding tines (16,18), the seeding tines being spaced either side of the digging tine so that in use, when the arrangement is pulled through soil to be cultivated and seeded, the digging tines create a plurality of trenches of broken up soil separated by strips of undisturbed soil, and seed is deposited in the formed trenches to either side of the centre of the trench by the first and second seeding tines.

9. An arrangement according to claim 8, wherein the first and second seeding tines (16,18) are spaced off from the centre line of the trench by 60 to 90mm.

10. An arrangement according to claim 8 or claim 9, wherein the first seeding tine (16) is arranged from 150 to 500mm, more preferably from 200 to 400mm, most preferably from 250 to 350mm forward of the second seeding tine (18).

11. An arrangement according to any one of claims 8 to 10, wherein the first seeding tine (16) is spaced behind the digging tine (14) by from 50 to 200mm, more preferably from 80 to 150mm.

12. An arrangement according to any one of claims 8 to 11, wherein the digging tines (14) are spaced apart from 200mm to 450mm.

13. An arrangement according to claim 12, wherein the digging tines (14) are spaced apart by from 250mm to 400mm.

14. An arrangement according to any one of claims 8 to 13, wherein the plurality of assemblies are attached to a frame.

15. A frame for cultivating soil and sowing seed and to be pulled by a motorized vehicle, the frame comprising an arrangement according to any one of claims 8 to 14 adapted to carry out the method according to any one of claims 1 to 7.

## Patentansprüche

1. Verfahren zur Bodenkultivierung und zum Aussähen von Saat, wobei das Verfahren das Aufbrechen des Bodens umfasst, indem seitlich beabstandete Grabzinken (14) durch unkultivierten Boden gezogen werden, wobei der Abstand zwischen den Grabzinken und ihrer Tiefe so ist, dass eine entsprechende Vielzahl von Gräben mit aufgebrochenem Boden erzeugt wird, die durch Streifen von ungestörtem Boden getrennt sind, und Saat in den gebildeten Gräben an jeder Seite der Mitte des Grabens durch erste und zweite Saatzinken (16, 18) abgesetzt wird.

2. Verfahren nach Anspruch 1, wobei die Grabzinken (14) etwa 200 bis 450 mm beabstandet sind.

3. Verfahren nach Anspruch 2, wobei die Grabzinken (14) etwa 250 bis 400 mm beabstandet sind.

4. Verfahren nach einem der vorhergehenden Ansprüche, wobei die erste und zweite Saatzinke (16, 18) von der Mittellinie des Grabens etwa 60 bis 90 mm beabstandet sind.

5. Verfahren nach einem der vorhergehenden Ansprüche, wobei das Verhältnis des Abstands zwischen zwei benachbarten Saatzinken in einem gegebenen Graben zu dem zwischen benachbarten Saatzinken mit ungestörtem Boden dazwischen von 1,5:1 bis 1:1,5, bevorzugter 1,3:1 bis 1:1,3, am meisten bevorzugt 1,2:1 bis 1:1,2 beträgt.

6. Verfahren nach einem der vorhergehenden Ansprüche, wobei die erste Saatzinke für jede Grabzinke von 150 bis 500 mm, bevorzugter 200 bis 400 mm, am meisten bevorzugt 250 bis 350 mm vor der zweiten Saatzinke beabstandet ist.

7. Verfahren nach einem der vorhergehenden Ansprüche, wobei die erste Saatzinke hinter jeder Grabzinke um 50 bis 200 mm, bevorzugter 80 bis 150 mm beabstandet ist.

8. Anordnung zur Bodenkultivierung und zum Aussähen von Samen, umfassend eine Vielzahl von beabstandeten Bodenkultivierungs- und Saateinheiten, wobei jede Einheit einen Körperanteil (12) mit davon abhängigen Teilen umfasst: einer führenden Grabzinke (14) und ersten und zweiten Saatzinken (16, 18), wobei die Saatzinken an jeder Seite der Grabzinke so beabstandet sind, dass bei Gebrauch, wenn die Anordnung durch zu kultivierenden und zu besähenden Boden gezogen wird, die Grabzinken eine Vielzahl von Gräben aus aufgebrochenem Boden erzeugen, die durch Streifen von ungestörtem Boden getrennt sind, und Saat in den gebildeten Gräben an jeder Seite der Mitte des Grabens durch die erste und zweite Saatzinke abgesetzt wird.

9. Anordnung nach Anspruch 8, wobei die erste und zweite Saatzinke (16, 18) von der Mittellinie des Grabens 60 bis 90 mm beabstandet sind.

10. Anordnung nach Anspruch 8 oder Anspruch 9, wobei die erste Saatzinke (16) 150 bis 500 mm, bevorzugter 200 bis 400 mm, am meisten bevorzugt 250 bis 350 mm vor der zweiten Saatzinke (18) angeordnet ist.

11. Anordnung nach einem der Ansprüche 8 bis 10, wobei die erste Saatzinke (16) hinter der Grabzinke (14) 50 bis 200 mm, bevorzugter 80 bis 150 mm beabstandet ist.

12. Anordnung nach einem der Ansprüche 8 bis 11, wobei die Grabzinken (14) 200 mm bis 450 mm beabstandet sind.

13. Anordnung nach Anspruch 12, wobei die Grabzinken (14) etwa 250 mm bis 400mm beabstandet sind.

14. Anordnung nach einem der Ansprüche 8 bis 13, wobei die Vielzahl der Einheiten an einem Rahmen befestigt ist.

15. Rahmen zur Bodenkultivierung und zum Aussähen von Saat, der durch ein motorisiertes Fahrzeug zu ziehen ist, wobei der Rahmen eine Anordnung nach einem der Ansprüche 8 bis 14 umfasst, die adaptiert ist, um das Verfahren gemäß einem der Ansprüche 1 bis 7 durchzuführen.

## Revendications

1. Procédé pour cultiver le sol et semer des graines, le procédé comprenant le fractionnement du sol en tirant des dents de creusage espacées latéralement les unes des autres (14) à travers un sol non cultivé, l'espacement entre les dents de creusage et leur profondeur étant prévu de manière à créer une pluralité correspondante de sillons de sol fractionné séparés par des bandes de sol intactes, et le dépôt de graines dans les sillons formés de part et d'autre du centre du sillon à l'aide d'une première et d'une seconde dents d'ensemencement (16, 18).

2. Procédé selon la revendication 1, dans lequel les dents de creusage (14) sont espacées les unes des autres de 200 mm à 450 mm.

3. Procédé selon la revendication 2, dans lequel les dents de creusage (14) sont espacées les unes des autres de 250 mm à 400 mm.

4. Procédé selon l'une quelconque des revendications précédentes, dans lequel les première et seconde dents d'ensemencement (16, 18) sont espacées de l'axe médian du sillon de 60 mm à 90 mm.

5. Procédé selon l'une quelconque des revendications précédentes dans lequel le rapport de l'espacement entre deux dents d'ensemencement adjacentes dans un sillon donné à celui des dents d'ensemencement adjacentes avec un sol intact entre celles-ci est compris entre 1,5:1 et 1:1,5, mieux encore entre 1,3:1 et 1:1,3, idéalement entre 1,2:1 et 1:1,2.

6. Procédé selon l'une quelconque des revendications précédentes, dans lequel pour chaque dent de creusage, la première dent d'ensemencement est espacée de 150 mm à 500 mm, mieux encore de 200 mm à 400 mm, et idéalement de 250 mm à 350 mm devant de la seconde dent d'ensemencement.

7. Procédé selon l'une quelconque des revendications précédentes, dans lequel la première dent d'ensemencement est espacée derrière chaque dent de creusage de 50 mm à 200 mm, mieux encore de 80 mm à 150 mm.

8. Ensemble de culture et d'ensemencement de sol, comprenant une pluralité d'ensembles de culture et d'ensemencement de sol espacés les uns des autres, chaque ensemble comprenant une partie de corps (12) à laquelle sont suspendus: une dent de creusage avant (14), et des première et seconde dents d'ensemencement (16, 18), les dents d'ensemencement étant espacées de part et d'autre de la dent de creusage de telle sorte que, lors de l'utilisation, lorsque l'agencement est tiré à travers le sol à cultiver et à ensemencer, les dents de creusage créent une pluralité de sillons de sol fractionné séparés par des bandes de sol intactes, et que des graines soient déposées dans les sillons formés de part et d'autre du centre du sillon par les première et seconde dents d'ensemencement.

9. Agencement selon la revendication 8, dans lequel les première et seconde dents d'ensemencement (16, 18) sont espacées de l'axe médian du sillon d'une distance de 60 mm à 90 mm.

10. Agencement selon la revendication 8 ou la revendication 9, dans lequel la première dent d'ensemencement (16) est agencée à une distance de 150 mm à 500 mm, mieux encore de 200 mm à 400 mm, et idéalement de 250 mm à 350 mm devant la seconde dent d'ensemencement (18).

11. Agencement selon l'une quelconque des revendications 8 à 10, dans lequel la première dent d'ensemencement (16) est espacée derrière la dent de creusage (14) d'une distance de 50 mm à 200 mm, mieux encore de 80 mm à 150 mm.

12. Agencement selon l'une quelconque des revendications 8 à 11, dans lequel les dents de creusage (14) sont espacées les unes des autres d'une distance de 200 mm à 450 mm.

13. Agencement selon la revendication 12, dans lequel les dents de creusage (14) sont espacées les unes des autres d'une distance de 250 mm à 400 mm.

14. Agencement selon l'une quelconque des revendications 8 à 13, dans lequel la pluralité d'ensembles sont attachés à un cadre.

15. Cadre pour cultiver le sol et semer des graines et à tirer à l'aide d'un véhicule motorisé, le cadre comprenant un agencement selon l'une quelconque des revendications 8 à 14 apte à exécuter le procédé selon l'une quelconque des revendications 1 à 7.
